# EUROPÄISCHE PATENTANMELDUNG

(11) **EP 2 458 593 A2**
(43) Veröffentlichungstag der Anmeldung: **30.05.2012**
(21) Anmeldenummer: 11008706.1
(22) Anmeldetag: 01.11.2011
(51) Int. Cl.: G21C 11/02, G21C 11/08

(54) **Abschirmring für einen Kernreaktor**

(30) Priorität: 25.11.2010 DE 102010052320
(71) Anmelder: Areva NP GmbH, 91052 Erlangen (DE)
(72) Erfinder: Worsch, Marcus, 91083 Baiersdorf (DE); Scheler, Reiner, 91301 Forchheim (DE)
(74) Vertreter: Tergau & Walkenhorst

(57) **Zusammenfassung**

Ein aus mehreren Ringsegmenten (10) zusammengesetzter Abschirmring (1) dient als Strahlungsschutz für Kernreaktoren (2). Um bedarfsweise über den gesamten Umfang hinweg einen einfachen radialen Zugang zum Ringinnenraum bereitzustellen, ist erfindungsgemäß vorgesehen, dass jedes der Ringsegmente (10) aus dem Ringverbund entfernt werden kann, und dass jedes Ringsegment (10) für sich in Umfangsrichtung (11) verschiebbar gelagert ist.

## Beschreibung

Die Erfindung betrifft einen sogenannten Abschirmring für eine kerntechnische Anlage, insbesondere für einen Kernreaktor. Dabei handelt es sich um eine ringförmige materielle Barriere, die eine Ausbreitung oder Diffusion von Teilchen, Strahlung oder thermischer Energie in einen abgegrenzten Raumabschnitt zumindest teilweise unterbindet.

Da die hier gewählte ringförmige Gestaltung der materiellen Barriere lediglich eine Anpassung an eine typische Problematik darstellt, kann eine erfindungsgemäße Barriere prinzipiell auch eine davon abweichende geometrische Form aufweisen.

Neben der abschirmenden Wirkung kann auch eine einfache Installation und Deinstallation der Barriere eine wichtige Zielsetzung sein. Dies ist beispielweise dann der Fall, wenn eine solche Barriere aufgrund notwendiger Wartungsarbeiten in regelmäßigen Abständen entfernt werden muss. Exemplarisch sei an dieser Stelle ein Abschirmring genannt, der an einem Reaktordruckbehälter anliegt. Die Schweißnähte des Reaktordruckbehälters müssen regelmäßig überprüft werden. Dazu ist es allerdings notwendig, den Abschirmring zu entfernen und dadurch den darunterliegenden Teil des Reaktordruckbehälters freizulegen.

Aus der Offenlegungsschrift DE 35 07 931 A1 ist eine als Strahlungsschutzschild bezeichnete Barriere für Kernreaktoren bekannt. Jener Strahlungsschutzschild ist aufgebaut aus mehreren kranzförmig angeordneten Elementen. Einige dieser Elemente sind auf einem Drehtisch gelagert, welcher auf radial nach außen laufenden Schienen bewegbar ist. Hierdurch können die entsprechenden Elemente aus dem Kranzverbund entfernt werden, wodurch in genau diesem Bereich ein Zugang zum Reaktordruckbehälter geschaffen wird. Für die übrigen Elemente ist hingegen keine Positionsvariabilität vorgesehen. Sie müssen demontiert werden, um den darunter liegenden Abschnitt des Reaktordruckbehälters freizulegen.

Überdies wird für die beweglichen Elemente Platz in radialer Richtung benötigt, der nicht immer vorhanden ist.

Ausgehend hiervon liegt der Erfindung die Aufgabe zugrunde, einen Abschirmring zu realisieren, der über den gesamten Umfang hinweg einen einfachen radialen Zugang zum Ringinnenraum bietet.

Diese Aufgabe ist durch die Merkmalskombination des Anspruchs 1 in erfinderischer Weise gelöst. Die Unteransprüche beinhalten teilweise zweckmäßige und teilweise für sich selbst erfinderische Weiterbildungen dieser Erfindung.

Ein der Lehre dieser Erfindung entsprechender Abschirmring ist aus mehreren Ringsegmenten zusammengesetzt. Zumindest eines, vorzugsweise jedes der Ringsegmente kann aus dem Ringverbund entfernt werden, und jedes Ringsegment ist für sich in Umfangsrichtung verschiebbar gelagert. Durch das Entfernen eines der Ringsegmente wird im Ringverbund ein Freiraum geschaffen, so dass der Ringinnenraum in diesem Bereich offen zugänglich ist. Gleichzeitig bietet der Freiraum den direkt benachbarten Ringsegmenten einen Ausweichraum, in den diese verschoben werden können. Ein Verschieben eines der benachbarten Ringsegmente bewirkt letztlich auch ein Verschieben des Freiraums. Da alle Ringsegmente verschiebbar gelagert sind, ist es somit bei einem erfindungsgemäßen Abschirmring auf einfache Weise möglich, den Freiraum durch Verschieben der Ringsegmente umfangsseitig beliebig zu positionieren und damit über den gesamten Umfang hinweg Zugang zum Ringinnenraum zu erlangen.

Ein so gestalteter Abschirmring eignet sich insbesondere zur Positionierung um einen Reaktordruckbehälter eines Kernreaktors. Aufgrund der Verschiebbarkeit des Zugangs zum Ringinnenraum und damit zum Reaktordruckbehälter ist der Zeitaufwand für die zuvor erwähnte Prüfung der Schweißnähte relativ gering. Dementsprechend gering ist dann auch die Strahlungsbelastung für die Techniker, welche die notwendige Überprüfung durchführen.

Besonders zweckmäßig ist eine Ausführungsform des Abschirmringes, bei der jedes Ringsegment an oder in einer Schiene geführt und entlang dieser verschiebbar ist. Hierdurch wird unter anderem eine sehr einfache technische Umsetzbarkeit gewährleistet.

In diesem Kontext wird es zudem als vorteilhaft angesehen, wenn ein jedes Ringsegment mit einer Anzahl von Rollen bestückt ist und über diese entlang der Schiene geführt wird. Vor allem bei Ringsegmenten deren Aufbau mit einem vergleichsweise hohen Eigengewicht einhergeht, erleichtert die Lagerung auf Rollen die Handhabung der Segmente, also die Verschiebung selbiger durch Muskelkraft.

Gemäß einer bevorzugten Ausführungsform wirkt mindestens ein Schienenteilstück nach Art einer Weiche. Dazu ist dieses Schienenteilstück mitsamt einer Anzahl von Ringsegmenten senkrecht zur Umfangsrichtung und vorzugsweise auch senkrecht zur Radialrichtung des Abschirmringes verfahrbar. Die beiden Endpositionen des Verfahrweges bedingen im Prinzip zwei mögliche Zustände, in denen sich der Abschirmring befinden kann. Im ersten Zustand bilden alle Ringsegmente zusammen den betriebsbereiten Abschirmring, wohingegen im zweiten Zustand die verfahrbaren Ringsegmente aus dem Ringverbund herausgelöst sind und als Folge ein Frei- bzw. Ausweichraum vorhanden ist. Eine aufwendige Demontage eines der Ringsegmente zur Schaffung eines Frei- bzw. Ausweichraums ist somit nicht notwendig.

Weiter ist es von Vorteil, ein zusätzliches Schienenteilstück als Parkschiene vorzusehen. Aufgrund seiner Positionierung ist dieses im ersten Zustand des Abschirmringes von den übrigen Schienenteilstücken getrennt und im zweiten Zustand mit dem als Weiche fungierenden Schienenteilstück verbunden. Hierdurch kann eine Anzahl von Ringsegmenten mit Hilfe der Weiche aus dem Ringverbund entfernt und anschließend entlang der Parkschiene deponiert werden.

Ein erfindungsgemäßer Abschirmring kann einzeln oder zusammen mit weiteren erfindungsgemäßen Abschirmringen eingesetzt werden. Ob es dabei zweckmäßiger ist, eine Parkschiene für mehrere Abschirmringe oder je eine Parkschiene für jeden Abschirmring einzuplanen, hängt von den individuellen Gegebenheiten ab. Die mit der Erfindung erzielten Vorteile bestehen insbesondere darin, dass ein System geschaffen wird, das mit vertretbarem Aufwand einen Zielkonflikt für den Abschirmring eines Kernreaktors löst: Zum einen muss er baulich möglichst geschlossen sein, um im Normalbetrieb eine gute Abschirmung zu erreichen. Andererseits müssen in bestimmten Bereichen und zu bestimmten Zeiten Öffnungen vorgesehen sein, damit die wiederkehrende Prüfung der Schweißnähte des Reaktordruckbehälters möglich ist. Beiden Anforderungen wird erfindungsgemäß durch die einzeln verschiebbaren und aus dem Ringverbund heraus lösbaren Ringsegmente Rechnung getragen, wobei zweckmäßigerweise eine einfache und schnelle Handhabung der Ringsegmente durch ein zugeordnetes Schienensystem, insbesondere mit höhenverstellbaren Weichen zur Ausschleusung eines Ringsegments aus dem Ringverbbund, realisiert ist. Auf diese Weise kann der Abschirmring bedarfsweise in eine "Prüfkonfiguration" mit entsprechenden Freiräumen oder "Lücken" im Ringverbund gebracht werden, die von den Manipulatoren für die Prüfaufgabe passiert werden können. Durch das Schienensystem oder allgemeiner Führungssystem ist ein geordneter und planbarer Ablauf der Verschiebe- oder Umordnungsoperationen sichergestellt, und es wird vermieden, dass sich einzelne Ringsegmente bei der Umordnung komplett lösen und in die Reaktorgrube bzw. in die Steuerstäbekammer hinunterfallen.

Das System ist nicht nur bei Kernreaktoren anwendbar, sondern beispielsweise auch chemischen oder sonstigen Industrieanlagen, bei denen ähnliche Abschirmringe zur thermischen, stofflichen und/oder strahlungsmäßigen Abschirmung eines äußeren oder inneren Raumbereiches eingesetzt werden, und bei denen temporär eine Zugangsöffnung bereitgestellt werden muss.

Anhand des Ausführungsbeispiels wird die Erfindung weiter beschrieben. Es zeigen in jeweils vereinfachter und schematisierter Darstellung:
- Fig. 1: einen Längsschnitt durch einen Kernreaktor mit einem Reaktordruckbehälter und einem daran anliegenden Abschirmring,
- Fig. 2: einen Querschnitt durch einen Kernreaktor mit einem Reaktordruckbehälter und einem daran anliegenden Abschirmring,
- Fig. 3: eine Seitenansicht auf zwei übereinander angeordnete Abschirmringe.

Einander entsprechende Teile sind in allen Figuren mit den gleichen Bezugszeichen versehen.

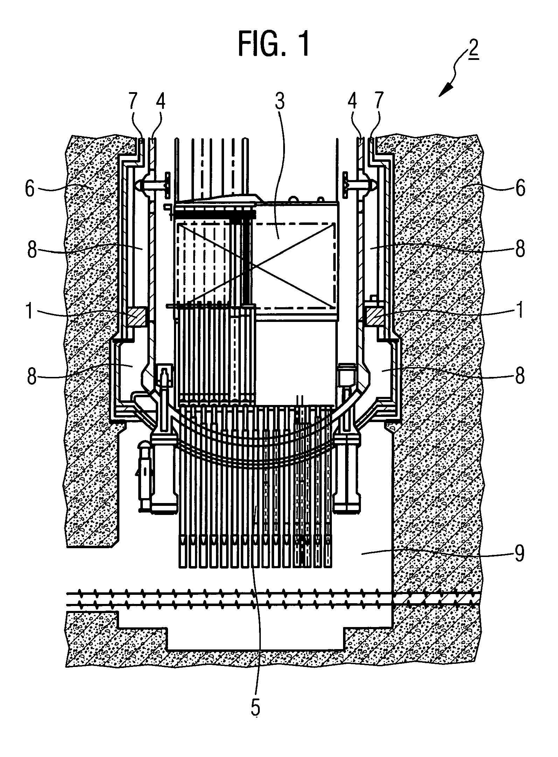

Ein hier exemplarisch betrachteter erfindungsgemäßer Abschirmring 1 wirkt als Strahlungsschutzelement in einem Kernreaktor 2, dessen Aufbau in Fig. 1 schematisch dargestellt ist. Im oberen Drittel des ausschnittsweise abgebildeten Längsschnittes befindet sich der Kern 3 des Reaktors 2, in welchem die moderierte Kernzerfallslawine ausgelöst wird. Eingeschlossen ist der von Reaktorkühlmittel - im wesentlichen Wasser - umspülte Kern 3 in einem Reaktordruckbehälter 4. Am Boden des Reaktordruckbehälters 4 sind Kontroll- oder Steuerstäbe 5 angeordnet, die im Bedarfsfall bis in den Kern 3 hinein verfahren werden können. Eingebettet ist die Apparatur in einen Mantel aus Beton. Dieser Betonmantel 6 dient einerseits als Halterung für den Reaktordruckbehälter 4 samt Steuerstäben 5 und andererseits als Strahlungsschutzhülle. Zwischen dem Betonmantel 6 und dem Reaktordruckbehälter 4 ist eine thermische Isolierung 7 vorgesehen, die unerwünschte Wärmeverluste reduziert.

Im Sicherheitskonzept des hier beschriebenen Kernreaktors 2 wird als größter anzunehmender Unfall (GAU) ein Störfall berücksichtigt, der zu einer Kernschmelze führt. Tritt ein derartiger Störfall ein, so erfolgt eine Außenkühlung des Reaktordruckbehälters 4 durch Wasser. Der hierfür notwendige Hohlraum oder Flutungsraum 8 trennt den Reaktordruckbehälter 4 räumlich von der thermischen Isolierung 7. In diesem Flutungsraum 8 ist der erfindungsgemäße Abschirmring 1 etwas unterhalb des Kerns 3 positioniert. Er unterteilt den Flutungsraum 8 in einen oberen und in einen unteren Hohlraum. Der Abschirmring 1 dient als zusätzliche materielle Barriere zur Abschirmung einer darunter liegenden Steuerstäbekammer 9 gegen Strahlung. Da sich in der Steuerstäbekammer 9 zeitweise Wartungspersonal aufhält, ist die durch den Abschirmring 1 bewirkte Verringerung der Strahlungsintensität innerhalb jener Kammer als signifikanter Vorteil anzusehen.

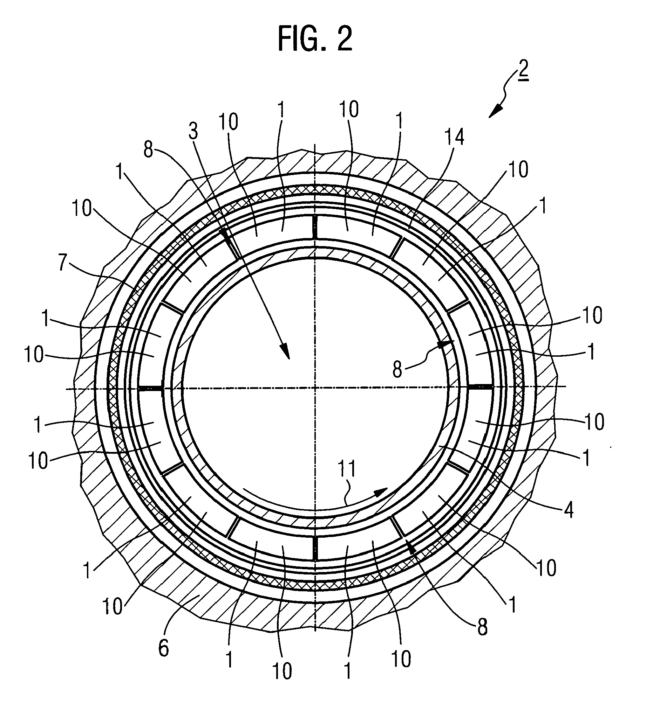

Aufgebaut ist der Abschirmring 1 aus mehreren strahlungsabsorbierenden Ringsegmenten 10. Der in Fig. 2 skizzierte Querschnitt durch den Kernreaktor 2 in Höhe des Abschirmringes 1 zeigt die vorgesehene Anordnung dieser Ringsegmente 10 im Ringverbund.

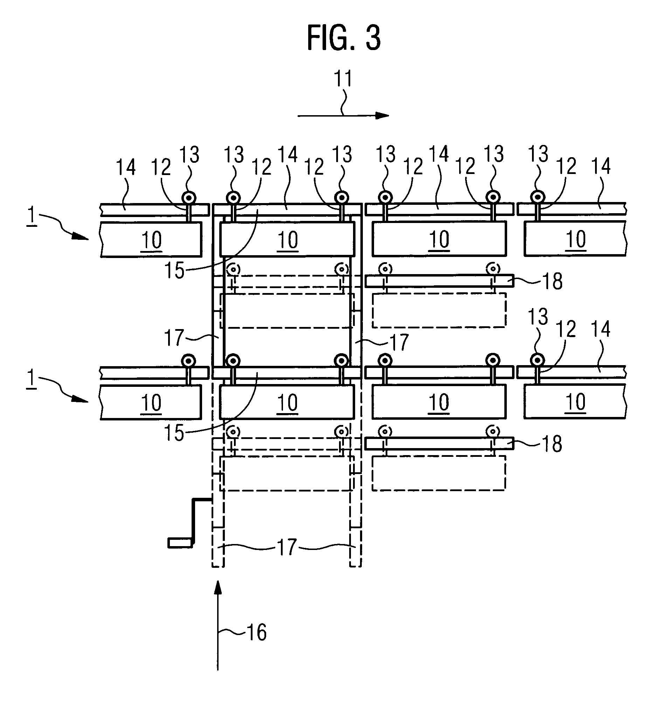

In Fig. 3 schließlich ist eine Seitenansicht einer Doppelbarriere aus zwei quasi übereinander gestapelten Abschirmringen 1 zu sehen. Das Erfindungsprinzip lässt sich jedoch selbstverständlich auch bei einer Einfachbarriere mit einem einzigen Abschirmring 1 verwirklichen. Die Zwischenräume zwischen den Ringsegmenten 10 eines Abschirmringes 1 dienen lediglich der Übersichtlichkeit in der Darstellung. Eine bevorzugte tatsächliche Umsetzung ist dagegen so gestaltet, dass die Ringsegmente 10 in Umfangsrichtung 11 formschlüssig bzw. spaltfrei aneinander anliegen. Jedes der Ringsegmente 10 weist an seine Oberseite zwei Fortsätze 12 auf, an deren Freiende je eine Rolle 13 gelagert ist. Die beiden Rollen 13 wiederum liegen auf einer Profilschiene 14 auf, welche über eine nicht näher dargestellte Verankerung mit dem Betonmantel 6 fest verbunden ist. Somit ist ein jedes Ringsegment 10 ähnlich der Gondel einer Luftseilbahn oder Seilschwebebahn an der Profilschiene 14 gelagert und entlang selbiger verschiebbar.

Ein Schienenteilstück einer jeden Profilschiene 14 des jeweiligen Abschirmringes 1 wirkt überdies nach Art einer Weiche 15. Hierfür ist dieses in Stapelrichtung 16 der Abschirmringe 1 und damit senkrecht zur Umfangsrichtung 11 und senkrecht zur Radialrichtung verfahrbar, sprich hebbar oder senkbar. Die Verfahrbarkeit gewährleistet eine einfache mechanische Konstruktion, wie beispielsweise ein durch Muskelkraft oder durch einen Elektroantrieb betriebener Flaschenzug. Wesentlich ist hierbei jedoch, dass zum einen das Schienenteilstück entlang des gesamten Verfahrweges zum Beispiel in einer doppelten Hebeschiene 17 geführt wird und zum anderen an den Endpositionen des Verfahrweges arretiert werden kann.

Befindet sich das als Weiche 15 fungierende Schienenteilstück in der ersten Endposition des Verfahrweges, so ist dieses mit den übrigen Teilstücken des Abschirmringes 1 verbunden. Eine Positionierung an der entgegengesetzten Endposition hingegen ermöglicht eine Verbindung mit einer entsprechend angeordneten Parkschiene 18. Als Folge kann ein Ringsegment 10 aus dem geschlossenen Ringverbund durch Absenken des als Weiche 15 eingesetzten Schienenteilstückes herausgelöst und anschließend entlang der Parkschiene 18 deponiert werden. Das dann nicht mehr belegte Schienenteilstück kann wieder angehoben werden, so dass die Profilschiene 14 abermals einen Ringkörper ausbildet. An der ursprünglichen Position des nun an der Parkschiene 18 gelagerten Ringsegmentes 10 ist sodann ein Frei- bzw. Ausweichraum vorhanden. Durch Verschieben der übrigen Ringsegmente 10 kann dieser Frei- bzw. Ausweichraum umfangsseitig beliebig positioniert werden, so dass damit der Zielsetzung entsprechend über den gesamten Umfang hinweg ein Zugang durch den Abschirmring 1 hindurch zum Reaktordruckbehälter 4 geschaffen werden kann.

### Bezugszeichenliste

- 1: Abschirmring
- 2: Kernreaktor
- 3: Kern
- 4: Reaktordruckbehälter
- 5: Steuerstab
- 6: Betonmantel
- 7: thermische Isolierung
- 8: Flutungsraum
- 9: Steuerstäbekammer
- 10: Ringsegment
- 11: Umfangsrichtung
- 12: Fortsatz
- 13: Rolle
- 14: Profilschiene
- 15: Weiche
- 16: Stapelrichtung
- 17: Hebeschiene
- 18: Parkschiene

## Patentansprüche

1. Aus mehreren Ringsegmenten (10) zusammengesetzter Abschirmring (1), zur Verwendung als Strahlungsschutz für Kernreaktoren (2),
**dadurch gekennzeichnet,**
**dass** zumindest eines, vorzugsweise jedes der Ringsegmente (10) aus dem Ringverbund entfernt werden kann, und dass jedes Ringsegment (10) für sich in Umfangsrichtung (11) des Abschirmrings (1) verschiebbar gelagert ist.

2. Abschirmring (1) nach Anspruch 1,
**dadurch gekennzeichnet,**
**dass** jedes Ringsegment (10) an oder in einer Schiene geführt und entlang dieser verschiebbar ist.

3. Abschirmring (1) nach Anspruch 2,
**dadurch gekennzeichnet,**
**dass** jedes Ringsegment (10) mit einer Anzahl von Rollen (13) versehen ist und dass diese Rollen (13) das Ringsegment (10) entlang der Schiene führen.

4. Abschirmring (1) nach einem der Ansprüche 1 bis 3,
**dadurch gekennzeichnet,**
**dass** mindestens ein Schienenteilstück als Weiche (15) fungiert, wobei das Schienenteilstück mitsamt einer Anzahl von Ringsegmenten (10) senkrecht zur Umfangsrichtung (11) des Abschirmringes (1) verfahrbar und damit aus dem Ringverbund entfernbar ist.

5. Abschirmring (1) nach Anspruch 4,
**dadurch gekennzeichnet**
**dass** das Schienenteilstück senkrecht zur Radialrichtung (11) des Abschirmringes (1) verfahrbar ist.

6. Abschirmring (1) nach einem der Ansprüche 1 bis 5,
**dadurch gekennzeichnet,**
**dass** eine zusätzliche, senkrecht zum Ringverbund versetzt positionierte Parkschiene (18) vorgesehen ist, die über die Weiche (15) an die übrigen Schienenteilstücke angebunden ist.

7. Kernreaktor (2) mit einem Reaktordruckbehälter (4) und einer Anzahl von den Reaktordruckbehälter (4) umgebenden Abschirmringen (1) nach einem der Ansprüche 1 bis 6.
